# EUROPEAN PATENT SPECIFICATION

(11) **EP 0 430 347 B1**
(45) Date of publication and mention of the grant of the patent: **26.10.1994**
(21) Application number: 90203065.9
(22) Date of filing: 19.11.1990
(51) Int. Cl.: A01C 23/02

(54) **Turf layer manuring device**
Rasenjauchedrill
Enfouisseur de lisier pour gazon

(30) Priority: 24.11.1989 NL 8902917
(43) Date of publication of application: 05.06.1991
(73) Proprietor: VREDO DODEWAARD B.V., NL-6669 DJ Dodewaard (NL)
(72) Inventor: De Vree, Johannes, NL-6669 DJ Dodewaard (NL)
(74) Representative: Hoijtink, Reinoud

(56) References cited:
- EP-A- 0 282 812
- DE-A- 2 017 530
- DE-A- 2 504 725
- NL-A- 8 500 272

## Description

Considerable environmental demands are nowadays made in the spreading of manure. The spreading of manure or liquid manure on the land releases a large quantity of ammonia which is absorbed into the environment via the air. in addition to the smell nuisance, this results in particularly adverse consequences for the environment.

The invention has for its object to provide a manuring device for meadow land with which the quantity of ammonia released during manuring is considerably limited.

Known from NL-A-8702901 is a turf layer manuring device which consists of a mobile device with means for arranging a narrow cut in the ground, dosing means arranged between a reservoir and distribution means and feed members connected to the distribution means for feeding liquid manure close to the cut.

From NL-A-8500272 a device for introducing liquid manure into the ground, particularly in meadow land, as described in the preamble of claim 1, is known.

DE-A-25 04 725 is related to a device to spray granular material on roads, such as sand, salt and so on. By means of a hydraulic sub-circuit the speed of a conveyor belt feeding the granular material to a disc-like rotating member is controlled. The conveying velocity of the belt and the rotation speed of the disc-like member are controlled by amongst other values the velocity of the moving device.

For such a device to function well it is most important that the dosage means function such that all feed members are provided with an equal, desired quantity of liquid manure. An excess of liquid manure results in environment-related drawbacks while an insufficient quantity results in inadequate spreading of manure. In addition, care has to be taken that the quantity of liquid manure supplied is dependent on the travel speed of the device, and therefore that the dosage (m³/ha) is independent of the travel speed.

The liquid manure may include solid portions which cause the distribution means to become blocked or jammed. In order to remedy this problem, the distribution means preferably contain a rotating distributing member for distributing the liquid manure uniformly over the connected feed members, wherein a reversing device is connected to the distributing member for causing the distributing member to rotate in opposing direction, while furthermore the reversing device responds to an electronic control unit when a predetermined value of the drive force exerted on the distributing member is exceeded. By causing the distributing member to rotate in a direction opposed to the normal carrying direction it is usually possible to release the contaminating portions and take them up again into the liquid manure flow.

The distributing member is preferably driven by a hydromotor and a pressure sensor is arranged in the feed line for hydraulic liquid to the motor for measuring the drive force for the distributing member. Measuring the pressure is thus used to establish that the pressure in the hydraulic liquid has risen too high, which indicates a blockage of the distributing member by contaminating portions.

By connecting the reversing device to the pressure sensor the rotation direction of the distributing member is automatically reversed in such a case.

The reversing device can consist of a two-way valve accommodated in the feed line for hydraulic liquid to the driving motor of the distributing member.

The attention of the user is preferably drawn to the response of the reversing device by means of signalling means. If the feed of liquid manure is not resumed after a time, the user can herewith stop the device and clean the distributing member.

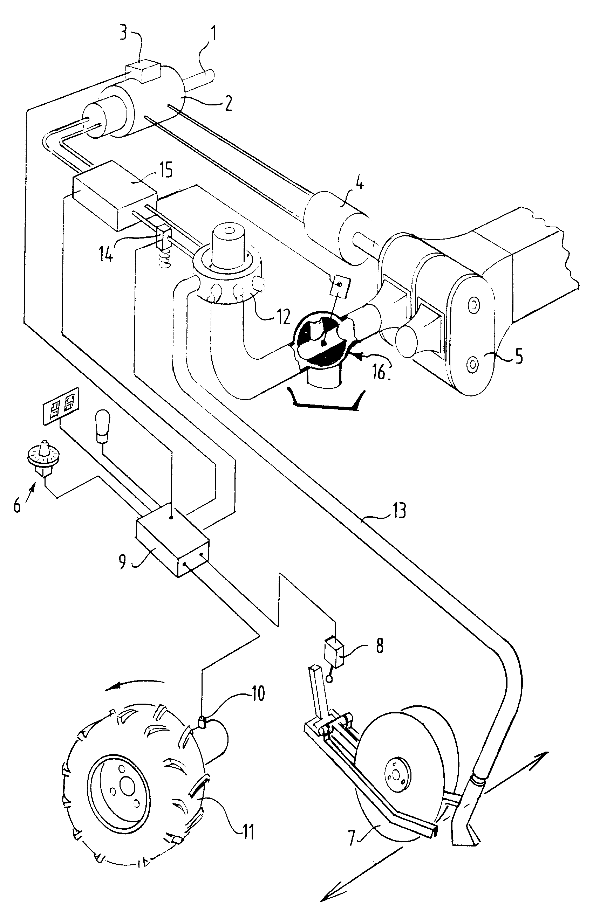

The invention will be elucidated with reference to the drawing.

From the shaft 1 of a vehicle pulling the device a hydropump 2 is driven. This pump can be continuously controlled via a valve 3 between a position wherein a minimal oil flow is delivered and a position wherein the oil flow is at the maximum. Driven by means of the oil flow via lines is a hydromotor 4 which is coupled to a manure pump 5 for pumping liquid manure. The pump 5 is connected to a liquid manure reservoir (not drawn). In this way the speed of revolution of the motor 4 can be controlled by means of the valve 3 and thereby the quantity of liquid manure delivered by the pump 5 per unit of time. This control can for instance take place from a control panel 6 on the tractive vehicle. A narrow cut is arranged in the ground using the blades 7. The sensor 8 checks whether the blades 7 are active and generates a signal to the electronic control unit 9. The valve 3 and the pump 2 are set into operation on the basis of a signal originating from a control unit 9.

A sensor 10 is coupled to the travel wheel 11. In this manner the travel speed is measured and a representative signal is transmitted to the electronic control unit 9. In the control unit 9 the finished surface area is related to the setting on the panel 6 in order to control the delivery of manure from the pump 5.

The manure flow from the pump 5 is uniformly distributed by at least one distributor 12 over all the outflow hoses 13. When there are particles in the liquid manure which are not removed by a filter, these hoses can become jammed. In the majority of cases it can be sufficient to cause the rotating inner distributor of the distributing member 12 to rotate several times in opposing direction. An automatic reversing device is arranged for this purpose. Jamming of the distributor is detected by a pressure switch 14 in the hydraulic circuit of the distributor. When a preset pressure is exceeded a signal is generated to the electronic control unit 9, whereafter a valve 15 is placed into the reversed position for a period of time to be adjusted, such that the distributor 12 rotates in opposing direction. This is shown on the panel 6 by means of an indicator light or audible signal.

By switching the three-way valve 16 from the "unload" to "load" position, the hydromotor 2 is regulated to the maximum speed of revolution automatically via valve 3 by means of a signal to the electronic control unit 9, whereby the manure pump 5 gives maximum output.

## Claims

1. Mobile device for introducing liquid manure into the ground, particularly in meadow land, with means (7) for arranging a narrow cut in the ground, pump means arranged between a reservoir and distribution means (12) comprising a rotating member and feed members connected to the distribution means for feeding liquid manure close to the cut and means for controlling the volume of the flow of manure, **characterized in that**, the rotating member is arranged as a rotating distributing member (12) for distributing the liquid manure uniformly over the connected feed members (13), a reversing device (15) is connected to the distributing member (12) for causing the distributing member (12) to rotate in opposing direction and that the reversing device responds to an electronic control unit (9) when a predetermined value of the driving force exerted on the distributing member is exceeded.

2. Device as claimed in claim 1, **characterized in that** the distributing member is driven by a hydromotor and that arranged in the feed line for hydraulic liquid to the motor is a pressure sensor (14) for measuring the driving force for the distributing member.

3. Device as claimed in claims 1-2, **characterized in that** the reversing device (15) is connected to the pressure sensor (14).

4. Device as claimed in claims 1-3, **characterized in that** the reversing device (15) consists of a two-way valve arranged in the feed line for hydraulic liquid to the drive motor of the distributing member.

5. Device as claimed in claims 1-4, **characterized in that** the speed of forward movement is measured by means of a sensor (10) connected to one (11) of the travel wheels.

6. Device as claimed in claims 1-5, **characterized by** means (8) for generating a signal to the dosing means when the means for arranging a cut in the ground come into operation.

7. Device as claimed in claim 1, **characterized by** signalling means for signalling when the reversing device (15) responds.

## Patentansprüche

1. Mobile Vorrichtung zum Einbringen von Flüssigdünger in den Boden, insbesondere in Wiesenland, mit einer Einrichtung (7) zum Ausbilden eines schmalen Schnittes in den Boden, einer Pumpeinrichtung, die zwischen einem Behälter und einer Verteileinrichtung (12), die ein rotierendes Element umfaßt, angeordnet ist, und Förderelementen, die an die Verteileinrichtung angeschlossen sind, um Flüssigdünger in die Nähe des Schnittes zu fördern, und Mitteln zum Steuern des Volumens des Düngerstroms,
dadurch **gekennzeichnet,** daß das rotierende Element als ein rotierendes Verteilelement (12) ausgebildet ist, um den Flüssigdünger gleichförmig über die angeschlossenen Förderelemente (13) zu verteilen, wobei an das Verteilelement (12) eine Umkehreinrichtung (15) angeschlossen ist, um zu bewirken, daß das Verteilelement (12) in entgegengesetzter Richtung dreht, und daß, die Umkehreinrichtung auf eine elektrische Steuereinheit (9) anspricht, wenn ein vorbestimmter Wert der auf das Verteilelement ausgeübten Antriebskraft überschritten wird.

2. Vorrichtung nach Anspruch 1,
dadurch **gekennzeichnet,** daß das Verteilelement durch einen Hydraulikmotor angetrieben wird und daß in der Zuführleitung für die Hydraulikflüssigkeit zum Motor ein Drucksensor (14) zum Messen der Antriebskraft für das Verteilelement angeordnet ist.

3. Vorrichtung nach Anspruch 1 und 2,
dadurch **gekennzeichnet,** daß die Umkehreinrichtung (15) an den Drucksensor (14) angeschlossen ist.

4. Vorrichtung nach Anspruch 1 bis 3,
dadurch **gekennzeichnet,** daß die Umkehreinrichtung (15) aus einem zwei-Wege-Ventil besteht, das in der Zuführleitung zum Motor für Hydraulikflüssigkeit des Verteilelementes angeordnet ist.

5. Vorrichtung nach Anspruch 1 bis 4,
dadurch **gekennzeichnet,** daß die Geschwindigkeit der Vorwärtsbewegung mittels eines Sensors (10) gemessen wird, der an eines (11) der Laufräder angeschlossen ist.

6. Vorrichtung nach Anspruch 1 bis 5,
**gekennzeichnet** durch eine Einrichtung (8) zum Erzeugen eines Signals für die Dosiereinrichtung, wenn die Einrichtung zum Erzeugen eines Schnitts im Boden in Betrieb gelangt.

7. Vorrichtung nach Anspruch 1,
**gekennzeichnet** durch eine Signaleinrichtung zum signalisieren, wenn die Umkehreinrichtung (15) anspricht.

## Revendications

1. Dispositif mobile servant à introduire un engrais liquide dans le sol, en particulier, dans un champ, pourvu d'un moyen (7) servant à effectuer un sillon étroit dans le sol, un moyen de pompage disposé entre un réservoir et un moyen de distribution (12) comprenant un organe rotatif et des organes d'amenée reliés au moyen de distribution, afin d'amener un engrais liquide à proximité du sillon et un moyen servant à commander le débit d'engrais, caractérisé en ce que l'organe rotatif est agencé comme un organe de distribution (12) rotatif, servant à distribuer l'engrais liquide de façon uniforme sur les organes d'amenée (13) connectés, un dispositif d'inversion (15) est relié a l'organe de distribution (12), afin de forcer l'organe de distribution (12) à tourner dans une direction opposée et en ce que le dispositif d'inversion répond à une unité de commande électronique (9), lorsqu'une valeur prédéterminée de la force d'entraînement exercée sur l'organe de distribution est dépassée.

2. Dispositif selon la revendication 1, caractérisé en ce que l'organe de distribution est entraîné par un hydromoteur et en ce qu'un capteur de pression (14), servant à mesurer la force d'entraînement destinée à l'organe de distribution, est disposé dans la conduite d'amenée destinée à un liquide hydraulique allant vers le moteur.

3. Dispositif selon les revendications 1 et 2, caractérisé en ce que le dispositif d'inversion (15) est connecté au capteur de pression (14).

4. Dispositif selon les revendications 1 à 3, caractérisé en ce que le dispositif d'inversion (15) consiste en une soupape à deux voies, disposées dans la conduite d'amenée de liquide hydraulique allant vers le moteur d'entraînement de l'organe de distribution.

5. Dispositif selon les revendications 1 à 4, caractérisé en ce que la vitesse de déplacement en marche avant est mesurée au moyen d'un capteur (10) relié à une roue (11) parmi les roues de déplacement.

6. Dispositif selon les revendications 1 à 5, caractérisé par un moyen (8) servant à envoyer un signal au moyen de dosage, lorsque le moyen de formation de sillon dans le sol est mis en fonctionnement.

7. Dispositif selon la revendication 1, caractérisé par un moyen de signalisation, servant à signaler le moment où le dispositif d'inversion (15) donne une réponse.
